# EUROPEAN PATENT APPLICATION

(11) **EP 2 887 442 A1**
(43) Date of publication of application: **24.06.2015**
(21) Application number: 13829885.6
(22) Date of filing: 15.07.2013
(51) Int. Cl.: H01M 10/06, H01M 2/12

(54) **STORAGE BATTERY WITH AIR CHAMBER EXHAUST SYSTEM**

(30) Priority: 14.08.2012 CN 201210286709; 14.08.2012 CN 201220399756 U
(71) Applicant: Camel Group Huazhong Branch Co. Ltd., Hubei 441705 (CN)
(72) Inventor: LIU, Shizhong, Xiangfan Hubei 441705 (CN); WANG, Tao, Xiangfan Hubei 441705 (CN); LIU, Juan, Xiangfan Hubei 441705 (CN); XIAO, Juntao, Xiangfan Hubei 441705 (CN)
(74) Representative: Zeuner Summerer Stütz
(86) International application number: PCT/CN2013/079362
(87) International publication number: WO 2014/026521

(57) **Abstract**

A storage battery with an air chamber exhaust system belongs to the technical field of a maintenance-free double cover-type lead-acid battery, and is used to solve the problems that the air exhaust is not sufficiently unobstructed and the effect of acid resistance is not sufficiently good in the exhaust system of the existing storage battery. The storage battery comprises polar plates, a casing, and an acid backflow resistance labyrinth structure of the battery, wherein the casing is composed of a casing body, an exhaust cover and a big cover; the labyrinth structure is formed by a space between the big cover and the exhaust cover; a part where an end of the labyrinth structure is in communication with the outside of the storage battery is the exhaust system; an air passageway is formed by a separation wall which is used for separating the exhaust system from other parts; a first air filter and a second air filter which are distributed in series along the airflow direction are arranged in the air passageway; and an air chamber is formed by the big cover and a barricade of the exhaust cover behind the first air filter. The storage battery is characterized by unobstructed air exhaust and good acid resistance effect, and is mainly used for filtering the exhausted air of the maintenance-free lead-acid battery.

## Description

### FIELD OF THE INVENTION

The invention belongs to the technical field of a maintenance-free double cover-type lead-acid battery, and especially to a storage battery with an air chamber exhaust system.

### BACKGROUND OF THE INVENTION

A maintenance-free lead-acid battery comprises polar plates and a casing composed of a casing body, a big cover and an exhaust cover. Generally, an acid backflow resistance labyrinth structure of the battery is formed by a space between the big cover and the exhaust cover. A part where an end of the labyrinth structure is in communication with the outside of the storage battery is an exhaust system. The system is commonly composed of air filters. The deficiencies of the battery are obstructed air exhaust and bad acid resistance effect. Accordingly, it is desired to design an exhaust system having unobstructed air exhaust and good acid resistance effect.

### SUMMARY OF THE INVENTION

In view of the above-described problems, it is one objective of the invention to provide a maintenance-free lead-acid battery with an air chamber exhaust system that has unobstructed air exhaust and good acid resistance effect.

To achieve the above objectives, there is provided a storage battery with an air chamber exhaust system, the storage battery comprises polar plates and a casing composed of a casing body, an exhaust cover and a big cover, an acid backflow resistance labyrinth structure of the battery is formed by a space between the big cover and the exhaust cover, a part where an end of the labyrinth structure is in communication with the outside of the storage battery is the exhaust system, characterized in that an air passageway is formed by a separation wall which is used for separating the exhaust system from other parts; a first air filter and a second air filter which are distributed in series along the airflow direction are arranged in the air passageway; and an air chamber is formed by the big cover and a barricade of the exhaust cover behind the first air filter.

In a class of this embodiment, the first air filter is arranged vertically, and the second air filter is arranged horizontally.

In a class of this embodiment, the first air filter is square, the air chamber is a square air chamber formed by the first air filter and a barricade, the outlet of the air chamber is set on a side barricade near the air filter.

In a class of this embodiment, the second air filter is circular.

In the invention, the first air filter and the air chamber which are distributed in series are arranged in the exhaust system where an end of the labyrinth structure is in communication with the outside of the storage battery. The separation wall is arranged around the first air filter and the air chamber for forming the air passageway and separating the exhaust system from other parts. The first air filter is arranged vertically facing a square air chamber. The outlet of the air chamber is set on the side barricade near the air filter. The gas circles in the square air chamber after passing through the first air filter and thus acid liquid can be condensed effectively. After the gas becomes dry gas, it passes through the outlet of the side and the second air filter along the air passageway, and is exhausted from the storage battery. The invention has overcome the drawbacks of the prior art and is characterized by unobstructed air exhaust and good acid resistance effect. The invention is mainly used for filtering the exhausted air of the maintenance-free lead-acid battery.

### BRIEF DESCRIPTION OF THE DRAWINGS

FIG. 1 is a schematic diagram of the invention.
FIG. 2 is a partial sectional view taking along line A-A of FIG.1.

### DETAILED DESCRIPTION OF THE EMBODIMENTS

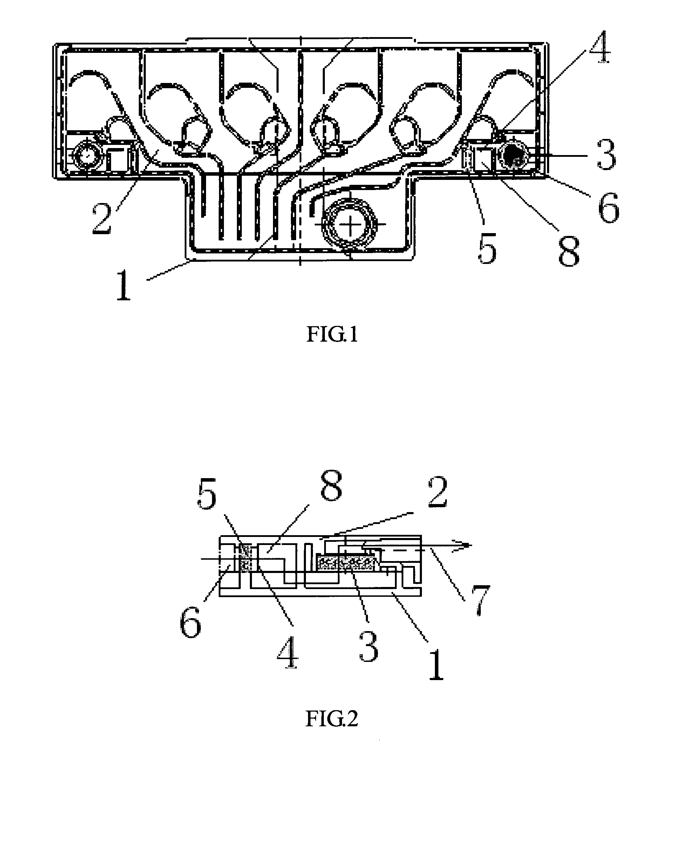

As shown in FIGS. 1 and 2, a storage battery with an air chamber exhaust system comprises polar plates and a casing composed of a casing body, a big cover 1 and an exhaust cover 2. An acid backflow resistance labyrinth structure of the battery is formed by a space between the big cover 1 and the exhaust cover 2, and a part where an end of the labyrinth structure is in communication with the outside of the storage battery is the exhaust system. An air passageway 6 is formed by a separation wall 4 which is used for separating the exhaust system from other parts. A first air filter 5 and a second air filter 3 which are distributed in series along the airflow direction 7 are arranged in the air passageway 6. The first air filter 5 is arranged on the end of the exhaust system labyrinth structure horizontally. The first air filter 5 is square and is arranged vertically to connect a square air chamber 8 formed by the first air filter 5 and a barricade directly. The outlet of the square air chamber 8 is set on a side barricade near the first air filter 5. There is no outlet is set on the barricade parallel to the first air filter 5.The second air filter 3 is circular and is arranged horizontally. Air passes through the first air filter 5, the square air chamber 8 and the second air filter 3 in sequence and then is exhausted from the storage battery. The first air filter 5, the square air chamber 8 and the second air filter 3 are connected in series. Both the first air filter 5 and the second air filter 3 cover the whole section of the air passageway 6.

## Claims

1. A storage battery with an air chamber exhaust system, comprising polar plates and a casing composed of a casing body, an exhaust cover (2) and a big cover (1), an acid backflow resistance labyrinth structure of the battery is formed by a space between the big cover (1) and the exhaust cover (2), a part where an end of the labyrinth structure is in communication with the outside of the storage battery is the exhaust system, **characterized in that** an air passageway (6) is formed by a separation wall (4) which is used for separating the exhaust system from other parts; a first air filter (5) and a second air filter (3) which are distributed in series along the airflow direction (7) are arranged in the air passageway (6); and an air chamber (8) is formed by the big cover (1) and a barricade of the exhaust cover (2) behind the first air filter (5).

2. The storage battery according to claim 1, **characterized in that** the first air filter (5) is arranged vertically, the second air filter (3) is arranged horizontally.

3. The storage battery according to claim 1 or 2, **characterized in that** the first air filter (5) is square, the air chamber (8) is a square air chamber formed by the first air filter (5) and a barricade, the outlet of the air chamber (8) is set on a side barricade near the first air filter (5).

4. The storage battery according to claim 1 or 2, **characterized in that** the second air filter (3) is circular.
